# EUROPÄISCHE PATENTSCHRIFT

(11) **EP 0 343 404 B1**
(45) Veröffentlichungstag und Bekanntmachung des Hinweises auf die Patenterteilung: **23.02.1994**
(21) Anmeldenummer: 89108007.9
(22) Anmeldetag: 03.05.1989
(51) Int. Cl.: B32B 5/28, B32B 5/26, B32B 19/06, B32B 27/02, E01C 11/16

(54) **Selbstklebende Kombinationsbahn zur Vorbeugung und Sanierung von Rissen insbesondere in Asphalt- und Betonflächen**
Self-adhesive multi-layer web for the prevention and sealing of crevices, especially in asphalt and concrete surfaces
Bande multi-couche autoadhérente pour la prévention et réparation des fissures, spécialement dans l'asphalte et le béton

(30) Priorität: 25.05.1988 AT 1362/88
(43) Veröffentlichungstag der Anmeldung: 29.11.1989
(73) Patentinhaber: Polyfelt Gesellschaft m.b.H., 4021 Linz (AT)
(72) Erfinder: Fock, Georg, Dipl.-Ing., A-8020 Graz (AT)
(74) Vertreter: Kunz, Ekkehard, Dr.

(56) Entgegenhaltungen:
- EP-A- 0 199 827
- FR-A- 2 193 711
- GB-A- 1 394 997
- US-A- 3 210 902
- US-A- 4 368 228
- US-A- 4 440 816
- US-A- 4 508 770

## Beschreibung

Die Erfindung betrifft eine selbstklebende Kombinationsbahn zur Vorbeugung und Sanierung von Rissen insbesondere in Asphalt- und Betonflächen im Straßen- und Wasserbau, bestehend aus einer Bewehrungsbahn aus Hochmodulfasern und einem Vlies oder Gewebe aus Thermoplastfasern, die durch ein elastisches Bindemittel miteinander verbunden sind.

Die Sanierung von Rissen in Fahrbahnen bzw. zwischen Fahrbahnteilen, beispielsweise zwischen einzelnen Betonplatten, erfolgt derzeit vor allem dadurch, daß die Risse mit Bitumen ausgefüllt und nach Aufbringen eines bituminösen Binde-bzw. Vorspritzmittels mit einer oder mehreren Asphaltschichten abgedeckt werden. Aufgrund der folgenden Belastungen treten je nach Intensität der Belastungen mehr oder weniger bald die selben Risse wieder auf, sodaß meist ziemlich bald eine neuerliche Sanierung der Fahrbahn notwendig wird. Es fehite nicht an Versuchen, diese Nachteile zu beheben. So wurde z. B. nach dem Auffüllen der Risse bzw. Schlaglöcher ein Vlies oder Gewebe aus Thermoplastfasern bzw. ein mit Bitumen imprägniertes oder beschichtetes Thermoplastvlies als Zwischenschicht auf die gesamte zu sanierende Fahrbahnfläche gelegt und darauf eine neue Asphaltdecke aufgebracht. Es konnte dabei nur eine gewisse Bewehrung und eine Verzögerung der Rißfortpflanzung bei der Überbauung von extremen Dehnungsfugen oder Rissen erreicht werden. Aufgrund der hohen Dehnungen der Thermoplastbahnen, die im Durchschnitt bei über 10 % liegen, treten bei starker Beanspruchung erneut Risse in der Fahrbahndecke auf.

Zur Ausschaltung dieser Nachteile wurde versucht, Gittermatten aus Glasfasern zur Bewehrung bzw. Überbrückung von gerissenen Straßenoberbauten zu verwenden. Der ausgefüllte Riß wird dabei mit dem Glasfasergitter abgedeckt und darauf eine Asphaltschicht aufgebracht. Aufgrund der geringen Dehnung der Glasfasern, die etwa vergleichbar mit jener von Asphaltbeton im Promillebereich liegt, kann mit Glasfasergittern zwar ein neuerliches Durchschlagen des abgedeckten Risses vermieden und dadurch im Bereich des ursprünglichen Risses eine Bewehrung erzielt werden. Als gravierender Nachteil erweist sich allerdings, daß die Gitterstruktur des Glasfasergitters durch die Verkehrsbelastung ziemlich bald durch die Asphaltdeckschicht durchschlägt und sichtbar wird, und daß vor allem an den Gittermattenrändern neue Risse, sogenannte Sekundärrisse, im Asphalt auftreten.

Das Ziel der vorliegenden Erfindung lag darin, die Entstehung von Rissen in Asphalt- und Betonflächen zu verhindern, und bereits vorhandene Risse dauerhaft zu sanieren.

Die Lösung der Aufgabe konnte mit Hilfe einer Kombinationsbahn aus einer Bewehrungsbahn aus Verstärkungsfasern und einem Vlies oder Gewebe aus Thermoplastfasern, die in einem elastischen, selbstklebenden Bindemittel eingebettet sind, gefunden werden.

Gegenstand der Erfindung ist demnach eine selbstklebende Kombinationsbahn zur Vorbeugung und Sanierung von Rissen insbesondere auf Asphalt- und Betonflächen im Straßen-und Wasserbau, bestehend aus einer flächenhaften Bewehrungsbahn aus Hochmodulfasern und einem Vlies oder Gewebe aus Thermoplastfasern, die durch ein elastisches, selbstklebendes Bindemittel miteinander derart verbunden sind, daß die Bewehrungsbahn vollständig und das Vlies oder Gewebe nur teilweise im Bindemittel eingebettet sind, wobei das Vlies oder Gewebe mit dem Bindemittel breiter ist als die Bewehrungsbahn und sich links und rechts über die Bewehrungsbahn hinaus erstreckt, und das Bindemittel gegebenenfalls mit einer Abdeckfolie abgedeckt ist.

Die in der Kombinationsbahn verwendete flächenhafte Bewehrungsbahn kann beispielsweise in Form von Geweben oder Gittern vorliegen. Bevorzugt sind Gitter aus Hochmodulfasern, die an den Kreuzungspunkten fixiert sind, beispielsweise durch Verklebung bzw. durch Verweben oder Verflechten der Fasern in den Kreuzungspunkten. In der Bewehrungsbahn können als Hochmodulfasern praktisch alle bekannten Verstärkungsfasern, wie z. B. Glas-, Graphit-, Aramid-, Keramik-, Metallfasern oder Fasern aus Polyetheretherketon (PEEK) verwendet werden, wobei Fasern aus Glas, Graphit, Aramid oder PEEK bevorzugt sind.

Die in der Kombinationsbahn verwendeten Vliese oder Gewebe bestehen aus Thermoplastfasern, wobei Fasern aus Polypropylen, Polyethylen, Polyester oder Polyamid bevorzugt sind. Fasern aus Polypropylen sind besonders bevorzugt. Als Vliese werden sowohl Endlosfaservliese als auch Stapelfaservliese eingesetzt, wobei Endlosfaservliese bevorzugt sind. Die Vliese oder Gewebe sind bevorzugt zumindest bis zur Hälfte, besonders bevorzugt bis zu zwei Drittel ihrer Dicke im Bindemittel eingebettet. Es ist weiters bevorzugt, daß sich die Vliese oder Gewebe mit dem Bindemittel links und rechts der Kombinationsbahn um mindestens 5 cm über die Bewehrungsbahn hinaus erstrecken.

Die in der Kombinationsbahn verwendeten Bindemittel bestehen vorzugsweise aus Bitumen, das gegebenenfalls mit Polymeren beispielsweise auf Basis von Styrol, Butadien, Buten, einem Ethylen-Propylen-Dien-Monomer (EPDM), Acrylnitril oder mit ataktischem Polypropylen modifiziert ist. Weitere bevorzugte Bindemittel sind Polymere auf Basis von Styrol, Butadien, Buten, EPDM, Acrylnitril und ataktisches Polypropylen. Die Bindemittel können gegebenenfalls mit organischen Lösungsmitteln verdünnt sein.

Entsprechend den zu erwartenden Belastungen können die erfindungsgemäßen Kombinationsbahnen Flächengewichte von vorzugsweise etwa 1000 bis 3500 g/m² besitzen. Das Flächengewicht der eingesetzten Vliese oder Gewebe liegt üblicherweise bei etwa 100 bis 1000 g/m², jenes der Bewehrungsbahnen bei etwa 50 bis 5000 g/m².

Die Entstehung von Rissen kann mit Hilfe der erfindungsgemäßen Kombinationsbahn beispielsweise bei Übergängen zwischen verschiedenen Fahrbahnabschnitten, wie z. B. den Fugen zwischen Betonplatten, der Fertigungsfuge zwischen den beiden Fahrbahnseiten oder im Übergangsbereich zu einer Brücke verhindert werden. Die Kombinationsbahn ist auch zur Sanierung von wieder verfüllten größeren Löchern, von Spurrillen, Frostaufbrüchen und anderen Unebenheiten im Straßenbau geeignet. Feine weitere wichtige Anwendungsmöglichkeit ergibt sich nach Aufgrabungsarbeiten zur Abdeckung der Fugen nach dem Wiederauffüllen der Gräben. Auch die Möglichkeit der Sanierung und Vorbeugung bzw. die Abdichtung von Rissen in Damm-und Kanalbau, beispielsweise bei Bewässerungskanälen ist möglich.

Zur Sanierung bzw. Rißvorbeugung von Flächen wird die mit einem Füllmaterial, beispielsweise einer bituminösen Masse ausgefüllte Fuge oder der Riß mit der erfindungsgemäßen, selbstklebenden Kombinationsbahn über die Fuge hinausgehend derart abgedeckt, daß das selbstklebende Bindemittel auf die zu schützende Fläche zu liegen kommt. Bei kleineren Rissen kann beispielsweise eine 50 cm breite Kombinationsbahn über dem Riß abgerollt werden, für breitere Risse, Löcher oder Unebenheiten sind entsprechend breitere Bahnen einzusetzen. Anschließend wird ein Vorspritzmittel, beispielsweise eine Bitumenemulsion, gleichmäßig auf die gesamte zu schützende Fläche aufgebracht. Die Aufnahmefähigkeit der Oberfläche der Kombinationsbahn für das Vorspritzmittel muß etwa gleich groß sein wie die Menge, die für die angrenzende zu sanierende Fläche verwendet wird. Dies wird dadurch erreicht, daß das Vlies bzw. Gewebe der Kombinationsbahn mehr oder weniger tief im Bindemittel eingebettet liegt. Liegt das Vlies oder Gewebe zu einem großen Teil frei, so wird die Aufnahmefähigkeit für ein Vorspritzmittel entsprechend größer sein, als wenn es tiefer eingebettet ist. Im Straßenbau werden üblicherweise etwa 0,2 bis 0,5 kg/m² Vorspritzmittel eingesetzt. Abschließend wird die sanierte Fläche üblicherweise mit einer Deckschicht, beispielsweise einer Asphaltbetondecke von etwa 2 - 10 cm Dicke, entsprechend der zu erwartenden Belastung, überbaut.

Neben der hervorragenden und dauerhaften Bewehrung, die mit der erfindungsgemäßen Kombinationsbahn sehr einfach und schnell, und dadurch mit nur geringer Verkehrsbehinderung, sowie ohne Auftreten von Sekundärrissen möglich ist, erweist sich auch die Tatsache von Vorteil, daß aufgrund der besonderen Konstruktion nur mehr der Bereich der Fuge oder des Risses abgedeckt werden muß und nicht die gesamte Fläche, wodurch der Materialverbrauch bedeutend reduziert wird. Außerdem ist es möglich, die Kombinationsbahn mit dünneren Deckschichten zu überbauen. Durch den Selbstklebeeffekt ist weiters ein weitgehend wetterunabhängiges Verlegen möglich, wobei nach Auflegen der Kombinationsbahn auf die saubere und trockene Fläche im Rißbereich sofort der Überbau aufgebracht werden kann.

Die vorteilhafte Wirkung der Kombinationsbahn beruht vor allem darauf, daß sie in der Kernzone bewehrend und in den Randzonen spannungsausgleichend wirk. Der Spannungsausgleich wird durch das seitliche Darüberhinausragen des mit dem elastischen Bindemittel imprägnierten Vlieses oder Gewebes über die Bewehrungsbahn erreicht. Bewegungen bzw. Spannungskonzentrationen können dadurch im Bereich der Kombinationsbahn abgebaut werden und werden nicht an die darüberliegenden Schichten weitergeleitet. Die geschützten bzw. sanierten Flächen werden auf diese Weise spannungs- bzw. zwängungsfrei gehalten.

Die Herstellung der erfindungsgemäßen Kombinationsbahn erfolgt durch einseitiges Imprägnieren der Bewehrungsbahn und des Vlieses oder Gewebes mit dem schmelzflüssigen Bindemittel. Dabei läßt man beispielsweise beide Bahnen über eine in der Bindemittelschmelze liegende Tauchwalze laufen oder die Bahnen werden von oben über eine Dosiereinrichtung, beispielsweise einen Düsenspalt oder eine Rakel, mit der Bindemittelschmelze imprägniert, wobei die oben liegende Bewehrungsbahn vollständig, das darunterliegende Vlies oder Gewebe jedoch nicht durchgehend durch die gesamte Dicke hindurch imprägniert werden. Eine weitere Möglichkeit besteht darin, die beiden Bahnen getrennt voneinander zu imprägnieren und sie erst anschließend zusammenzuführen. Anschließend wird die Kombinationsbahn abgequetscht und abgekühlt.

### Beispiel 1:

Ein 0,3 m breites Gitter aus Glasfasern (180 g/m²; SD 6510 K, Virtulan, BRD) sowie ein 0,5 m breites, 1,5 mm dickes und 140 g/m² schweres Polypropylen-Endlosfaservlies (Polyfelt^{(R)} PGM 14) wurden mit einer 150°C heißen Schmelze aus SBS-modifiziertem Bitumen (Dörrkuplast, Dörr, Österreich) imprägniert und derart abgequetscht, daß das Vlies 1 mm tief im Bitumen eingebettet zu liegen kam. Anschließend wurde die erhaltene Kombinationsbahn zur Verfestigung abgekühlt und das Bitumen mit einer 0,03 mm Polyethylen-Trennfolie (Fepla-Hirsch) abgedeckt.

### Beispiel 2:

Eine Kombinationsbahn wurde analog zu Beispiel 1 hergestellt, wobei jedoch ein Glasfasergitter mit einem Flächengehalt von 205 g/m² (SD 6810 K/53) verwendet wurde.

### Beispiel 3:

Um die überlegene Wirkung der erfindungsgemäßen Kombinationsbahn aufzuzeigen, wurde ein Verkehrslastversuch simuliert. Auf eine 50 mm dicke, kreisförmige Gummiunterlage mit einem Durchmesser von 2,5 m, wurde eine 25 mm dicke Asphaltschicht aufgebracht und entlang dem Durchmesser zwei aufeinander senkrecht stehende, 3 mm breite und 25 mm tiefe Fugen ausgeschnitten und so ein Riß simuliert. Eine Fuge wurde mit der erfindungsgemäßen 0,5 m breiten Kombinationsbahn gemäß Beispiel 1 abgedeckt, die andere Fuge mit einer Kombinationsbahn, bei der im Unterschied zu jener gemäß Beispiel 1 sowohl Glasfasergitter als auch Polypropylenvlies 0,5 m breit waren. Abschließend wurde mit einer Bitumenemulsion vorgespritzt und mit einer weiteren Asphaltschicht von 50 mm Dicke abgedeckt. Auf dieser Asphaltbahn ließ man auf einer Kreisbahn mit einem Durchmesser von 1,5 m zwei auf einem Drehgestell montierte, einander gegenüberliegende Gummiräder mit einem Durchmesser von 225 mm und einer Breite von 85 mm, die jeweils mit einem Gewicht von 1,85 kN belastet wurden, rotieren. Die Drehzahl der Radanordnung auf der erfindungsgemäß sanierten Asphaltbahn betrug 25 Umdrehungen pro min. Der nicht erfindungsgemäß sanierte Riß trat nach 56540 Umdrehungen (entsprechend 113080 Belastungen) als Sekundärriß durch die Asphaltabdeckung durch. Der erfindungsgemäß sanierte Riß trat erst nach 91250 Umdrehungen (entsprechend 182500 Belastungen) als zentraler Riß durch die Asphaltabdeckung durch.

## Patentansprüche (Patentansprüche für folgende(n) Vertragsstaat(en): AT, BE, CH, DE, FR, GB, GR, IT, LI, LU, NL, SE)

1. Selbstklebende Kombinationsbahn zur Vorbeugung und Sanierung von Rissen insbesondere in Asphalt- und Betonflächen im Straßen-und Wasserbau, bestehend aus einer flächenhaften Bewehrungsbahn aus Hochmodulfasern und einem Vlies oder Gewebe aus Thermoplastfasern, die durch ein elastisches, selbstklebendes Bindemittel derart miteinander verbunden sind, daß die Bewehrungsbahn vollständig und das Vlies oder Gewebe nur teilweise im Bindemittel eingebettet sind, wobei das Vlies oder Gewebe mit dem Bindemittel breiter ist als die Bewehrungsbahn und sich links und rechts über die Bewehrungsbahn hinaus erstreckt, und das Bindemittel gegebenenfalls mit einer Abdeckfolie abgedeckt ist.

2. Kombinationsbahn gemäß Anspruch 1, dadurch gekennzeichnet, daß das Bindemittel aus Bitumen besteht, das gegebenenfalls mit Polymeren auf Basis von Styrol, Butadien, Buten, EPDM, Acrylnitril oder mit ataktischem Polypropylen modifiziert ist.

3. Kombinationsbahn gemäß Anspruch 1, dadurch gekennzeichnet, daß das Bindemittel aus einem Polymeren auf Basis von Styrol, Butadien, Buten, EPDM, Acrylnitril oder ataktischem Polypropylen besteht.

4. Kombinationsbahn gemäß einem der Ansprüche 1 bis 3, dadurch gekennzeichnet, daß die Bewehrungsbahn aus einem Fasergitter besteht.

5. Kombinationsbahn gemäß einem der Ansprüche 1 bis 4, dadurch gekennzeichnet, daß die Hochmodulfasern der Bewehrungsbahn aus Glas, Graphit, Aramid oder Polyetheretherketon bestehen.

6. Kombinationsbahn gemäß einem der Ansprüche 1 bis 5, dadurch gekennzeichnet, daß das Vlies oder Gewebe aus Polypropylen-, Polyethylen-, Polyester-, oder Polyamidfasern besteht.

7. Kombinationsbahn gemäß einem der Ansprüche 1 bis 6, dadurch gekennzeichnet, daß das Vlies oder Gewebe zumindest bis zur Hälfte ihrer Dicke im Bindemittel eingebettet sind.

8. Kombinationsbahn gemäß einem der Ansprüche 1 bis 7, dadurch gekennzeichnet, daß sich das Vlies oder Gewebe mit dem Bindemittel links und rechts um mindestens 5 cm über die Bewehrungsbahn hinaus erstreckt.

9. Kombinationsbahn gemäß einem der Ansprüche 1 bis 8, dadurch gekennzeichnet, daß das Vlies aus Endlosfasern besteht.

10. Verfahren zur Vorbeugung bzw. Sanierung von Rissen insbesondere in Asphalt und Betonflächen, dadurch gekennzeichnet, daß ein mit Füllmaterial ausgefüllter Riß oder eine Fuge bzw. ein Übergang zwischen zwei Fahrbahnkonstruktionen mit der Kombinationsbahn gemäß Anspruch 1 überdeckt und die gesamte zu schützende oder zu sanierende Fläche anschließend überbaut bzw. abgedeckt wird, wodurch die Überbauungen bzw. Abdeckungen der geschützten oder sanierten Fläche spannungs- bzw. zwängungsfrei gehalten werden.

## Patentansprüche (Patentansprüche für folgende(n) Vertragsstaat(en): ES)

1. Selbstklebende Kombinationsbahn zur Vorbeugung und Sanierung von Rissen insbesondere in Asphalt- und Betonflächen im Straßen- und Wasserbau, bestehend aus einer flächenhaften Bewehrungsbahn aus Hochmodulfasern und einem Vlies oder Gewebe aus Thermoplastfasern, die durch ein elastisches, selbstklebendes Bindemittel derart miteinander verbunden sind, daß die Bewehrungsbahn vollständig und das Vlies oder Gewebe nur teilweise im Bindemittel eingebettet sind, wobei das Vlies oder Gewebe mit dem Bindemittel breiter ist als die Bewehrungsbahn und sich links und rechts über die Bewehrungsbahn hinaus erstreckt, und das Bindemittel gegebenenfalls mit einer Abdeckfolie abgedeckt ist.

2. Kombinationsbahn gemäß Anspruch 1, dadurch gekennzeichnet, daß das Bindemittel aus Bitumen besteht, das gegebenenfalls mit Polymeren auf Basis von Styrol, Butadien, Buten, EPDM, Acrylnitril oder mit ataktischem Polypropylen modifiziert ist.

3. Kombinationsbahn gemäß Anspruch 1, dadurch gekennzeichnet, daß das Bindemittel aus einem Polymeren auf Basis von Styrol, Butadien, Buten, EPDM, Acrylnitril oder ataktischem Polypropylen besteht.

4. Kombinationsbahn gemäß einem der Ansprüche 1 bis 3, dadurch gekennzeichnet, daß die Bewehrungsbahn aus einem Fasergitter besteht.

5. Kombinationsbahn gemäß einem der Ansprüche 1 bis 4, dadurch gekennzeichnet, daß die Hochmodulfasern der Bewehrungsbahn aus Glas, Graphit, Aramid oder Polyetheretherketon bestehen.

6. Kombinationsbahn gemäß einem der Ansprüche 1 bis 5, dadurch gekennzeichnet, daß das Vlies oder Gewebe aus Polypropylen-, Polyethylen-, Polyester- oder Polyamidfasern besteht.

7. Kombinationsbahn gemäß einem der Ansprüche 1 bis 6, dadurch gekennzeichnet, daß das Vlies oder Gewebe zumindest bis zur Hälfte ihrer Dicke im Bindemittel eingebettet sind.

8. Verfahren zur Vorbeugung bzw. Sanierung von Rissen insbesondere in Asphalt- und Betonflächen, dadurch gekennzeichnet, daß ein mit Füllmaterial ausgefüllter Riß oder eine Fuge bzw. ein Übergang zwischen zwei Fahrbahnkonstruktionen mit der Kombinationsbahn gemäß Anspruch 1 überdeckt und die gesamte zu schützende oder zu sanierende Fläche anschließend überbaut bzw. abgedeckt wird, wodurch die Überbauungen bzw. Abdeckungen der geschützten oder sanierten Fläche spannungs- bzw. zwängungsfrei gehalten werden.

9. Verfahren zur Herstellung einer selbstklebenden Kombinationsbahn zur Vorbeugung und Sanierung von Rissen insbesondere in Asphalt- und Betonflächen im Straßen- und Wasserbau, dadurch gekennzeichnet, daß eine flächenhafte Bewehrungsbahn aus Hochmodulfasern und ein Vlies oder Gewebe aus Thermoplastfasern derart mit einem elastischen, selbstklebenden Bindemittel imprägniert werden, daß die Bewehrungsbahn vollständig und das Vlies oder Gewebe nur teilweise im Bindemittel eingebettet sind, wobei das Vlies oder Gewebe mit dem Bindemittel breiter ist als die Bewehrungsbahn und sich links und rechts über die Bewehrungsbahn hinaus erstreckt, und das Bindemittel gegebenenfalls mit einer Abdeckfolie abgedeckt wird.

10. Verwendung einer selbstklebenden Kombinationsbahn zur Vorbeugung und Sanierung von Rissen insbesondere in Asphalt- und Betonflächen im Straßen- und Wasserbau, bestehend aus einer flächenhaften Bewehrungsbahn aus Hochmodulfasern und einem Vlies oder Gewebe aus Thermoplastfasern, die durch ein elastisches, selbstklebendes Bindemittel derart miteinander verbunden sind, daß die Bewehrungsbahn vollständig und das Vlies oder Gewebe nur teilweise im Bindemittel eingebettet sind, wobei das Vlies oder Gewebe mit dem Bindemittel breiter ist als die Bewehrungsbahn und sich links und rechts über die Bewehrungsbahn hinaus erstreckt, und das Bindemittel gegebenenfalls mit einer Abdeckfolie abgedeckt ist.

## Claims (Claims for the following Contracting State(s): AT, BE, CH, DE, FR, GB, GR, IT, LI, LU, NL, SE)

1. Self-adhesive combination web for preventing and making good cracks, especially in asphalt and concrete surfaces in road construction and engineering hydraulics, comprising a sheet-like reinforcing web of high-modulus fibres and a nonwoven or woven fabric of thermoplastic fibres, which are mutually bonded by an elastic, self-adhesive binder in such a way that the reinforcing web is fully embedded in the binder and the nonwoven or woven fabric is only partially embedded, the nonwoven or woven fabric with the binder being wider than the reinforcing web and extending beyond the reinforcing web to the left and to the right, and the binder being covered, if desired, with a protective sheet.

2. Combination web according to Claim 1, characterised in that the binder consists of bitumen which may have been modified by polymers based on styrene, butadiene, butene, EPDM or acrylonitrile or by atactic polypropylene.

3. Combination web according to Claim 1, characterised in that the binder consists of a polymer based on styrene, butadiene, butene, EPDM or acrylonitrile or of atactic polypropylene.

4. Combination web according to any of Claims 1 to 3, characterised in that the reinforcing web consists of a fibre grid.

5. Combination web according to any of Claims 1 to 4, characterised in that the high-modulus fibres of the reinforcing web consist of glass, graphite, aramide or polyether-ether-ketone.

6. Combination web according to any of Claims 1 to 5, characterised in that the nonwoven or woven fabric consists of polypropylene fibres, polyethylene fibres, polyester fibres or polyamide fibres.

7. Combination web according to any of Claims 1 to 6, characterised in that the nonwoven or woven fabric is embedded in the binder up to at least half its thickness.

8. Combination web according to any of Claims 1 to 7, characterised in that the nonwoven or woven fabric with the binder extends beyond the reinforcing web by at least 5 cm to the left and to the right.

9. Combination web according to any of Claims 1 to 8, characterised in that the nonwoven consists of continuous filaments.

10. Process for preventing or making good cracks, especially in asphalt and concrete surfaces, characterised in that a crack infilled with a fill material, or a gap or a transition between two carriageway structures is covered by the combination web according to Claim 1 and the entire surface, which is to be protected or made good, is then covered or surfaced, so that the coverings or surfacings of the area protected or made good are kept free of stresses or constraints.

## Claims (Claims for the following Contracting State(s): ES)

1. Self-adhesive combination web for preventing and making good cracks, especially in asphalt and concrete surfaces in road construction and engineering hydraulics, comprising a sheet-like reinforcing web of high-modulus fibres and a nonwoven or woven fabric of thermoplastic fibres, which are mutually bonded by an elastic, self-adhesive binder in such a way that the reinforcing web is fully embedded in the binder and the nonwoven or woven fabric is only partially embedded, the nonwoven or woven fabric with the binder being wider than the reinforcing web and extending beyond the reinforcing web to the left and to the right, and the binder being covered, if desired, with a protective sheet.

2. Combination web according to Claim 1, characterised in that the binder consists of bitumen which may have been modified by polymers based on styrene, butadiene, butene, EPDM or acrylonitrile or by atactic polypropylene.

3. Combination web according to Claim 1, characterised in that the binder consists of a polymer based on styrene, butadiene, butene, EPDM or acrylonitrile or of atactic polypropylene.

4. Combination web according to any of Claims 1 to 3, characterised in that the reinforcing web consists of a fibre grid.

5. Combination web according to any of Claims 1 to 4, characterised in that the high-modulus fibres of the reinforcing web consist of glass, graphite, aramide or polyether-ether-ketone.

6. Combination web according to any of Claims 1 to 5, characterised in that the nonwoven or woven fabric consists of polypropylene fibres, polyethylene fibres, polyester fibres or polyamide fibres.

7. Combination web according to any of Claims 1 to 6, characterised in that the nonwoven or woven fabric is embedded in the binder up to at least half its thickness.

8. Process for preventing or making good cracks, especially in asphalt and concrete surfaces, characterised in that a crack infilled with a fill material, or a gap or a transition between two carriageway structures is covered by the combination web according to Claim 1 and the entire surface, which is to be protected or made good, is then covered or surfaced, so that the coverings or surfacings of the area protected or made good are kept free of stresses or constraints.

9. Process for producing a self-adhesive combination web for preventing and making good cracks, especially in asphalt and concrete surfaces in road construction and engineering hydraulics, characterised in that a sheet-like reinforcing web of high-modulus fibres and a nonwoven or woven fabric of thermoplastic fibres are impregnated with an elastic, self-adhesive binder in such a way that the reinforcing web is fully embedded in the binder and the nonwoven or woven fabric is only partially embedded, the nonwoven or woven fabric with the binder being wider than the reinforcing web and extending beyond the reinforcing web to the left and to the right, and the binder being covered, if desired, with a protective sheet.

10. Use of a self-adhesive combination web for preventing and making good cracks, especially in asphalt and concrete surfaces in road construction and engineering hydraulics, consisting of a sheet-like reinforcing web of high-modulus fibres and of a nonwoven or woven fabric of thermoplastic fibres, which are mutually bonded by an elastic, self-adhesive binder in such a way that the reinforcing web is fully embedded in the binder and the nonwoven or woven fabric is only partially embedded, the nonwoven or woven fabric with the binder being wider than the reinforcing web and extending beyond the reinforcing web to the left and to the right, and the binder being covered, if desired, with a protective sheet.

## Revendications (Revendications pour l'(les) Etat(s) contractant(s) suivant(s): AT, BE, CH, DE, FR, GB, GR, IT, LI, LU, NL, SE)

1. Bande multicouche autoadhérente pour la prévention et la réparation de fissures, en particulier dans les surfaces d'asphalte et de béton en construction routière et hydraulique, consistant en une bande d'armature restant à plat en fibres à haut module et en un voile ou tissu de fibres thermoplastiques, qui sont unis ensemble par un liant élastique autoadhérent de façon telle que la bande d'armature soit totalement noyée et le voile ou le tissu ne le soit que partiellement dans le liant, le voile ou le tissu avec le liant étant plus large que la bande d'armature et s'étendant à gauche et à droite au-delà de la bande d'armature et le liant étant facultativement recouvert d'une feuille de protection.

2. Bande multicouche suivant la revendication 1, caractérisée en ce que le liant consiste en bitume qui est facultativement modifié par des polymères à base de styrène, de butadiène, de butène, d'EPDM, d'acrylonitrile ou de polypropylène atactique.

3. Bande multicouche suivant la revendication 1, caractérisée en ce que le liant consiste en polymères à base de styrène, de butadiène, de butène, d'EPDM, d'acrylonitrile ou de polypropylène atactique.

4. Bande multicouche suivant l'une quelconque des revendications 1 à 3, caractérisée en ce que la bande d'armature consiste en un treillis de fibres.

5. Bande multicouche suivant l'une quelconque des revendications 1 à 4, caractérisée en ce que les fibres à haut module de la bande d'armature consistent en verre, en graphite, en aramide ou en polyétheréthercétone.

6. Bande multicouche suivant l'une quelconque des revendications 1 à 5, caractérisée en ce que le voile ou tissu consiste en fibres de polypropylène, de polyéthylène, de polyester ou de polyamide.

7. Bande multicouche suivant l'une quelconque des revendications 1 à 6, caractérisée en ce que le voile ou tissu est noyé au moins jusqu'à la moitié de son épaisseur dans le liant.

8. Bande multicouche suivant l'une quelconque des revendications 1 à 7, caractérisée en ce que le voile ou tissu avec le liant s'étend à gauche et à droite au moins de 5 cm au-delà de la bande d'armature.

9. Bande multicouche suivant l'une quelconque des revendications 1 à 8, caractérisée en ce que le voile consiste en monofibres.

10. Procédé de prévention ou de réparation de fissures, en particulier dans des surfaces d'asphalte et de béton, caractérisé en ce qu'une fissure remplie d'une matière d'obturation ou un joint ou bien une transition entre deux constructions de chaussée sont recouverts d'une bande multicouche suivant la revendication 1 et l'ensemble de la surface à protéger ou à réparer est ensuite garnie de sa superstructure ou recouverte, de sorte que les superstructures ou couvertures des surfaces protégées ou réparées sont maintenues exemptes de tensions ou de contraintes.

## Revendications (Revendications pour l'(les) Etat(s) contractant(s) suivant(s): ES)

1. Bande multicouche autoadhérente pour la prévention et la réparation de fissures, en particulier dans les surfaces d'asphalte et de béton en construction routière et hydraulique, consistant en une bande d'armature restant à plat en fibres à haut module et en un voile ou tissu de fibres thermoplastiques, qui sont unis ensemble par un liant élastique autoadhérent de façon telle que la bande d'armature soit totalement noyée et le voile ou le tissu ne le soit que partiellement dans le liant, le voile ou le tissu avec le liant étant plus large que la bande d'armature et s'étendant à gauche et à droite au-delà de la bande d'armature et le liant étant facultativement recouvert d'une feuille de protection.

2. Bande multicouche suivant la revendication 1, caractérisée en ce que le liant consiste en bitume qui est facultativement modifié par des polymères à base de styrène, de butadiène, de butène, d'EPDM, d'acrylonitrile ou de polypropylène atactique.

3. Bande multicouche suivant la revendication 1, caractérisée en ce que le liant consiste en polymères à base de styrène, de butadiène, de butène, d'EPDM, d'acrylonitrile ou de polypropylène atactique.

4. Bande multicouche suivant l'une quelconque des revendications 1 à 3, caractérisée en ce que la bande d'armature consiste en un treillis de fibres.

5. Bande multicouche suivant l'une quelconque des revendications 1 à 4, caractérisée en ce que les fibres à haut module de la bande d'armature consistent en verre, en graphite, en aramide ou en polyétheréthercétone.

6. Bande multicouche suivant l'une quelconque des revendications 1 à 5, caractérisée en ce que le voile ou tissu consiste en fibres de polypropylène, de polyéthylène, de polyester ou de polyamide.

7. Bande multicouche suivant l'une quelconque des revendications 1 à 6, caractérisée en ce que le voile ou tissu est noyé au moins jusqu'à la moitié de son épaisseur dans le liant.

8. Procédé de prévention ou de réparation de fissures, en particulier dans des surfaces d'asphalte et de béton, caractérisé en ce qu'une fissure remplie d'une matière d'obturation ou un joint ou bien une transition entre deux constructions de chaussée sont recouverts d'une bande multicouche suivant la revendication 1 et l'ensemble de la surface à protéger ou réparer est ensuite garnie de sa superstructure ou recouverte, de sorte que les superstructures ou couvertures des surfaces protégées ou réparées sont maintenues exemptes de tensions ou de contraintes.

9. Procédé de fabrication d'une bande multicouche autoadhérente pour la prévention et la réparation de fissures, en particulier dans les surfaces d'asphalte et de béton en construction routière et hydraulique, caractérisé en ce qu'une bande d'armature restant à plat en fibres à haut module et un voile ou un tissu en fibres thermoplastiques sont imprégnés d'un liant élastique autoadhérent de façon telle que la bande d'armature soit totalement noyée et le voile ou le tissu ne le soit que partiellement dans le liant, le voile ou le tissu avec le liant étant plus large que la bande d'armature et s'étendant à gauche et à droite au-delà de la bande d'armature et le liant étant éventuellement recouvert d'une feuille de protection.

10. Utilisation d'une bande multicouche pour la prévention et la réparation de fissures, en particulier dans les surfaces d'asphalte et de béton en construction routière et hydraulique, consistant en une bande d'armature restant à plat en fibres à haut module et en un voile ou tissu de fibres thermoplastiques, qui sont unis ensemble par un liant élastique autoadhérent de façon telle que la bande d'armature soit totalement noyée et le voile ou le tissu ne le soit que partiellement dans le liant, le voile ou le tissu avec le liant étant plus large que la bande d'armature et s'étendant à gauche et à droite au-delà de la bande d'armature et le liant étant facultativement recouvert d'une feuille de protection.
